# EUROPÄISCHE PATENTSCHRIFT

(11) **EP 0 522 098 B1**
(45) Veröffentlichungstag und Bekanntmachung des Hinweises auf die Patenterteilung: **04.10.1995**
(21) Anmeldenummer: 91919887.9
(22) Anmeldetag: 07.11.1991
(51) Int. Cl.: B23Q 11/08, B23Q 11/10

(54) **VORRICHTUNG ZUM ABSAUGEN VON BEARBEITUNGSRÜCKSTÄNDEN**
SUCTION DEVICE FOR REMOVING MACHINING WASTE
DISPOSITIF POUR L'ASPIRATION DE RESIDUS D'USINAGE

(30) Priorität: 26.11.1990 DE 4037544
(43) Veröffentlichungstag der Anmeldung: 13.01.1993
(73) Patentinhaber: RINGLER, Bernhard, 73550 Waldstetten (DE)
(72) Erfinder: RINGLER, Bernhard, 73550 Waldstetten (DE)
(74) Vertreter: Becker, Maria, Dipl.-Phys.
(86) Internationale Anmeldenummer: DE9100873
(87) Internationale Veröffentlichungsnummer: WO9209402

(56) Entgegenhaltungen:
- EP-A- 0 244 358
- DD-A- 135 872
- DE-A- 2 503 279
- DE-C- 418 216
- DE-U- 9 012 864
- FR-A- 881 531
- FR-A- 2 530 521
- SU-A- 1 386 422
- US-A- 1 367 579
- US-A- 1 426 496
- US-A- 1 740 185
- US-A- 2 401 056
- US-A- 4 449 870

## Beschreibung

Die Erfindung bezieht sich auf eine Vorrichtung zum Absaugen von auf einer Bearbeitungsmaschine im Bereich eines Werkstückes anfallenden Bearbeitungsrückständen, wie Späne und/oder Stäube, mit einer das auf einem Arbeitstisch aufgespannte Werkstück umgebenden Einfassung zur Eingrenzung des Ablagerungsbereichs der Bearbeitungsrückstände in einem nach oben offenen Saugraum und mit einem an den Saugraum über einen Saugkanal angeschlossenen Saugaggregat zur Erzeugung eines Saugluftstromes innerhalb des Saugraumes, wobei der Arbeitstisch mehrere Spannuten zum Festspannen des Werkstückes aufweist.

Bei einer derartigen Vorrichtung (vgl. DE-U-9 012 864) wird der Saugluftstrom innerhalb des Saugraumes von einer besonderen, im Bereich der Einfassung angeordneten Ringdüse erzeugt. Die Grösse des Saugraumes wird von der Ringdüse hauptsächlich bestimmt.

Der Erfindung liegt die Aufgabe zugrunde, eine gattungsgemässe Vorrichtung so weiterzubilden, dass sie im Aufbau noch einfacher ist und dass sie innerhalb kürzester Zeit an der Bearbeitungsmaschine eingerichtet werden kann.

Die Aufgabe wird erfindungsgemäss dadurch gelöst, dass der Saugkanal durch mindestens eine im Arbeitstisch vorgesehene und innerhalb des Saugraumes sich befindende Nut gebildet ist.

Da die Nut bereits im Arbeitstisch vorgesehen ist, müssen beim Aufbau der Absaugvorrichtung nicht extra Absaugkanäle installiert werden. Die Nut kann, falls erforderlich, entsprechend abgedeckt werden, so dass lediglich der abzusaugende Bereich vom Saugstrom beaufschlagt wird.

Bei einer vorteilhaften Weiterbildung ist der Saugkanal durch mindestens eine Spannut gebildet, die ausserhalb des Saugraumes abgedeckt ist.

Diese erfindungsgemässe Ausgestaltung der Vorrichtung hat den Vorteil, dass die Spannuten neben ihrer Eigenschaft als Spannelement für die Werkstücke gleichzeitig als Saugkanäle zur Erzeugung eines Saugluftstromes im Saugraum verwendet werden. Durch diese Doppelfunktion der Spannuten kann auf die ansonsten notwendige Ringdüse verzichtet werden, wodurch die Vorrichtung mit weniger Einzelteilen auskommt und damit in ihrem Aufbau einfacher ist. Ein weiterer Vorteil besteht darin, dass durch den Wegfall der Ringdüse die Vorrichtung wesentlich schneller montiert werden kann.

Durch die Gestaltung der Einfassung gemäss Anspruch 3 bleiben die Spannuten offen für das Festspannen von Werkstücken bzw. wird durch das Festspannen von Werkstücken der Absaugvorgang nicht behindert.

Bei einer vorteilhaften Weiterbildung ist vorgesehen, dass die Nuten in einen im Arbeitstisch vorgesehenen Ringkanal münden, der mit dem Saugkanal verbunden ist. Hierdurch werden zusätzlich Verbindungsschläuche oder -kanäle zum Verbinden der einzelnen Nuten vermieden.

Um die Grösse des Saugraumes auf möglichst einfache Weise verändern zu können, ist es zweckmässig, wenn alle Spannuten des Werkstücktisches als Saugkanäle herangezogen werden. Hierbei ist es dann für den Anschluss der Spannuten an die Saugleitung vorteilhaft, wenn diese gemäss Anspruch 5 an mindestens eine der Rinnen angeschlossen ist. Hierdurch werden mit einem Sauganschluss alle Spannuten erreicht.

Schliesslich wird eine Vereinfachung in der Abdeckung der ausserhalb des Saugraumes liegenden Spannuten durch die Merkmale des Anspruchs 6 erzielt.

In der Zeichnung ist ein mögliches Ausführungsbeispiel der erfindungsgemässen Vorrichtung zusammen mit einer Fräsmaschine schematisch dargestellt.

Es zeigen:

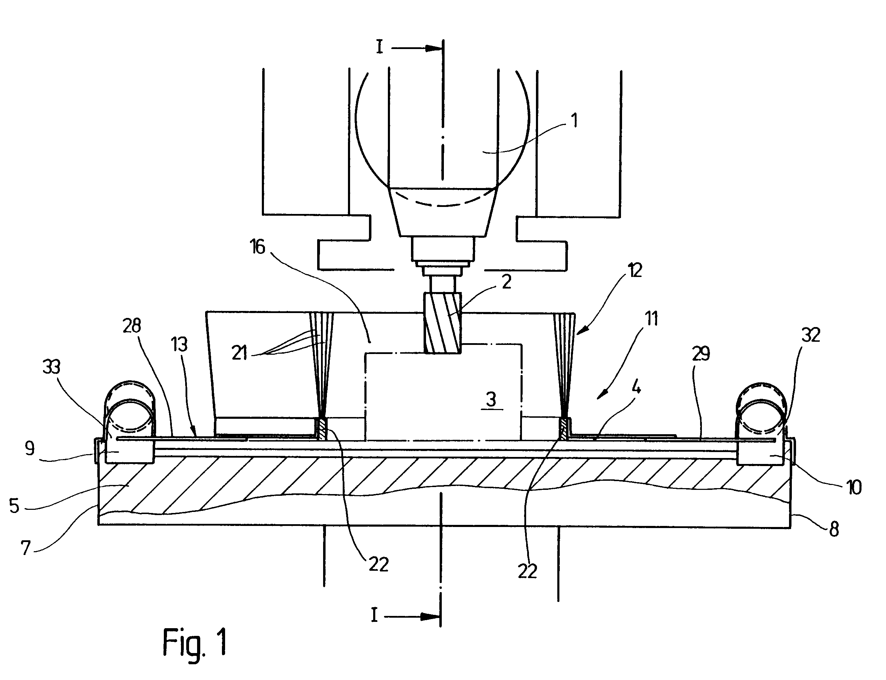

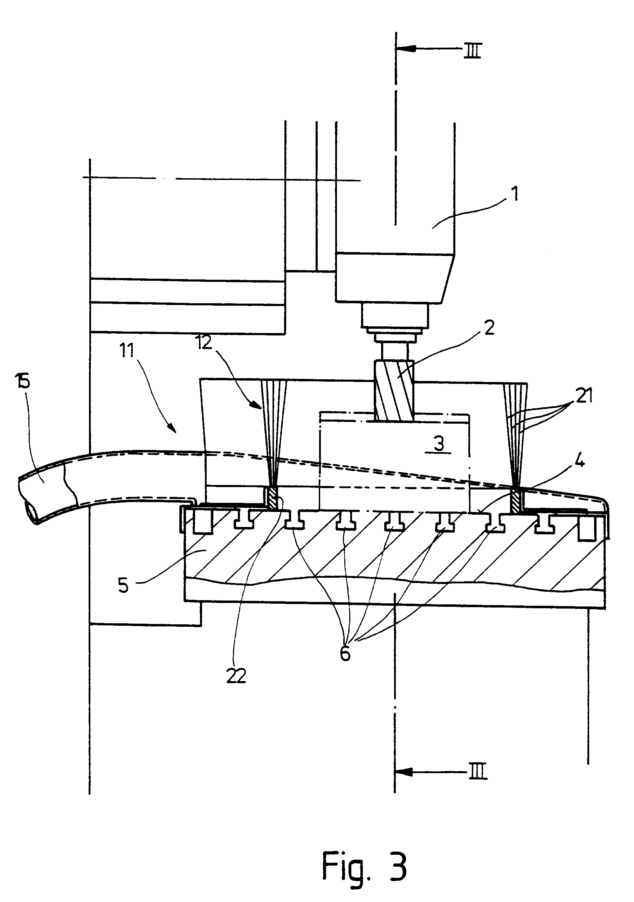

- Fig. 1: in Vorderansicht teilweise eine Fräsmaschine mit einer am Arbeitstisch befestigten erfindungsgemässen Vorrichtung im Querschnitt gemäss der Linie III - III aus Fig. 3;

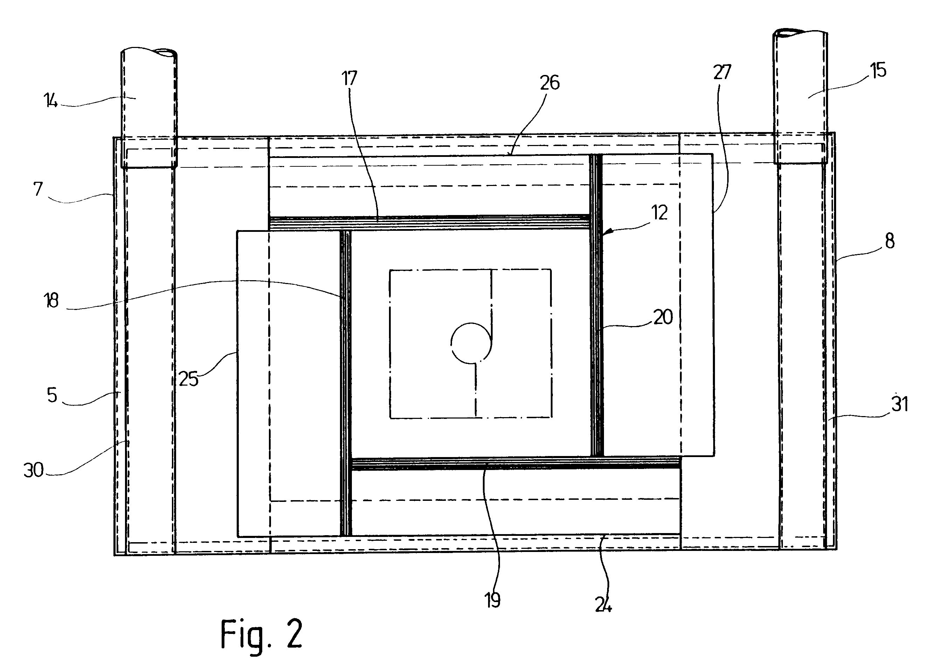

- Fig. 2: in Draufsicht den Arbeitstisch der Fräsmaschine mit dem durch Wandelemente begrenzten Saugraum und mit zwei an die Rinnen angeschlossenen Saugleitungen im Längsschnitt;
- Fig. 3: eine Seitenansicht der Vorrichtung im Schnitt gemäss der Linie I - I aus Fig. 1;
- Fig. 4: eine Draufsicht auf einen Arbeitstisch mit in die Arbeitsfläche integrierten Nuten zum Absaugen der Bearbeitungsrückstände;
- Fig. 5: einen Schnitt V - V gemäss Fig. 4, die Anordnung der Nuten und eines mit den Nuten verbundenen Ringkanals zeigend.

In den Fig. ist mit 1 ein Fräskopf einer Fräsmaschine bezeichnet, der ein Fräswerkzeug 2 zur spanabhebenden Bearbeitung eines Werkstückes 3 enthält. Das Werkstück 3 liegt auf einer Aufspannfläche 4 eines Arbeitstisches 5 auf. Der Arbeitstisch 5 ist mit mehreren parallel verlaufenden Spannuten 6 versehen, die zur Aufspannfläche 4 offen sind. Das Werkstück 3 wird mittels in die Spannuten 6 einsetzbarer Spannelemente am Arbeitstisch 5 in einer nicht dargestellten Weise festgespannt. Im Bereich der beiden längsseitigen Tischkanten 7 und 8 befindet sich je eine quer zu den Spannuten 6 verlaufende Rinne 9 und 10, in welche die Spannuten 6 auslaufen und von denen aus die Spannelemente in die Spannuten 6 eingesetzt werden.

Die während der Bearbeitung des Werkstückes 3 auf dem Arbeitstisch 5 anfallenden Späne und/oder Staubpartikel werden mittels einer Vorrichtung 11 abgesaugt. Die Vorrichtung 11 besteht dabei aus einer das Werkstück 3 seitlich umschliessenden rahmenförmigen Einfassung 12, einer Abdeckung 13 für die ausserhalb der Einfassung 12 liegenden Öffnungen der Spannuten 6 und zwei an die Rinnen 9, 10 angeschlossenen Saugleitungen 14 und 15. die Saugleitungen sind mit einem nicht dargestellten Saugaggregat verbunden.
Die vom Arbeitstisch 5 im Winkel nach oben abstehende Einfassung 12 bildet die Grenze für den Ablagerungsbereich der Bearbeitungsrückstände auf der Aufspannfläche 4 und zusammen mit den als Saugkanälen wirkenden Spannuten 6 die Grenze für einen sich über der Aufspannfläche 4 bei eingeschaltetem Saugaggregat ausbildenden Saugraum 16. Die innerhalb des Saugraumes 16 offenen Spannuten wirken als Saugdüsen und die ausserhalb des Saugraumes liegenden verschlossenen Bereiche der Spannuten 6 als Saugkanäle. Hierdurch ist es möglich, innerhalb des Saugraumes 16 einen bis in die Saugleitungen 14, 15 reichenden effektiven Saugluftstrom zu erzeugen. Die dabei während der Bearbeitung des Werkstückes 3 anfallenden Bearbeitungsrückstände werden von den offenen Spannuten aus dem Saugraum 16 abgesaugt und durch die abgedeckten Abschnitte der Spannuten 6 in die Saugleitungen abtransportiert. Es ist auch denkbar, dass nur eine oder eine bestimmte Anzahl von Spannuten 6 zur Absaugung der Bearbeitungsrückstände aus dem Saugraum 16 herangezogen wird. Hierfür reicht es aus, wenn nur diese entsprechenden Spannuten ausserhalb des Saugraumes 16 als Saugkanäle abgedeckt und an die Saugleitung 14, 15 angeschlossen sind.

Gemäss dem Ausführungsbeispiel besteht die Einfassung 12 aus vier einzelnen Wandelementen 17, 18, 19 und 20, welche gegenseitig aneinander stossen und so einen viereckförmigen Saugraum 16 bilden. Jedes dieser Wandelemente 17 bis 20 besteht dabei aus einer Vielzahl von sich überlappenden Borsten 21, die jeweils in einer Leiste gehalten sind. An den Leisten 21 sind Dauermagnete angebracht, so dass jedes Wandelement 17 bis 20 mittels magnetischer Haltekräfte am Arbeitstisch 5 fixiert ist. Hierdurch können die Wandelemente ohne Werkzeug schnell vom Arbeitstisch 5 entfernt bzw. aufgebaut und zur Veränderung des Saugraumes 16 verschoben werden.

Die Abdeckung 13 besteht aus Abdeckblechen 24, 25, 26 und 27, die an den Leisten 22 der Wandelemente befestigt sind und von diesen etwa rechtwinklig abstehen. Ihre Grösse ist dabei so festgelegt, dass sie allein oder in Verbindung mit weiteren Abdeckblechen 28 und 29 die ausserhalb des Saugraumes liegenden Abschnitte der Spannuten 6 erfassen. Um eine variable, auf unterschiedlich grosse Saugräume 16 und Arbeitstische 5 schnell einstellbare Abdeckung 13 zu erreichen, ist es vorteilhaft, wenn die Abdeckbleche 24 bis 27 aus mehreren teleskopartig zueinander verschiebbaren Plattenelementen bestehen. Auch ist es aus denselben Gründen denkbar, dass die Abdeckbleche 24 bis 27 aus wickelbaren Stahl- oder Kunststoffbändern bestehen, die einerseits an den Leisten 22 und andererseits abrollbar am Arbeitstisch gehalten sind.

Die Saugleitungen 14 und 15 umfassen zum Anschluss an die Rinnen 9, 10 jeweils einen Rohrstutzen 3o und 31 mit einer schlitzartigen, zur Rinne 9, 10 gerichteten Saugöffnung 32, 33. Ausgehend von der Saugleitung 14, 15 nimmt dabei der Querschnitt der Rohrstutzen stetig ab. Durch diese düsenartige Ausbildung der Rohrstutzen wird ein möglichst gleichmässiger Saugzug in allen angeschlossenen Spannuten 6 erzielt. Die Rohrstutzen 30, 31 sind entweder am Arbeitstisch 5 mittels Halter befestigt, oder sie werden in den Rinnen 9, 10 festgeklemmt. An den Rohrstutzen 30, 31 sind weiterhin die zusätzlichen Abdeckbleche 28, 29 angebracht, welche zusammen mit den Abdeckblechen 24 bis 27 an den Leisten 22 die gesamten Spannuten 6 abdecken. Gleichzeitig werden von den Abdeckblechen jeweils die offenen Seiten der aus einem Blech U-förmig gebogenen Rohrstutzen 30, 31 bis auf die Saugöffnungen 32, 33 verschlossen, wobei derden Querschnitt zur Erzielung eines guten Saugzuges kleiner sein kann als der Öffnungsquerschnitt einer Rinne 9, 10.

Im Rahmen der Erfindung besteht die Möglichkeit, dass nur eine Saugleitung 14 oder 15 an eine Rinne 9 oder 10 angeschlossen ist, wobei dann die jeweils nicht angeschlossene Rinne entsprechend verschlossen wird.

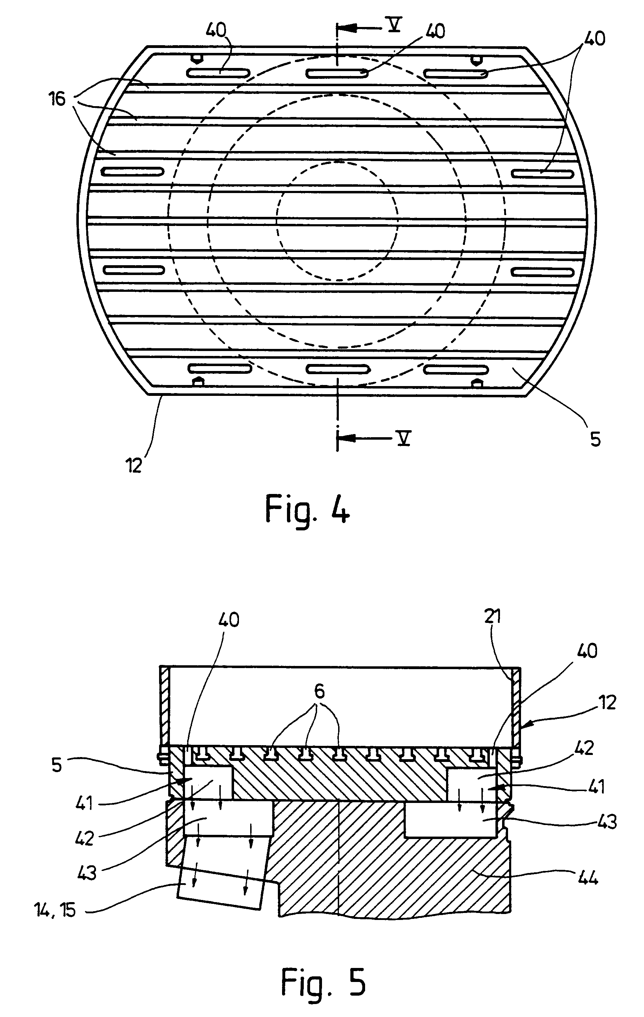

Die Figuren 4 und 5 zeigen eine weitere Ausführungsform, bei der im Arbeitstisch 5 als Düsen wirkende Nuten 40 eingearbeitet sind. Diese Nuten 40 verlaufen in Richtung der Spannuten 6, sind jedoch kürzer als diese. Ferner ist erkennbar, dass die Nuten im Randbereich der Einfassung 12 vorgesehen sind. Die Nuten 40 münden in einen unterhalb der Spannuten 6 vorgesehenen Ringkanal 41, der seinerseits mit der Saugleitung 14, 15 verbunden ist. Ist der Arbeitstisch 5 als Drehtisch ausgebildet, so ist der Ringkanal 41 zweigeteilt in einen oberen und einen unteren Abschnitt 42 bzw. 43, wobei der obere Abschnitt 42 im drehbaren Ovaltisch und der untere Abschnitt 43 in der Konsole 44 vorgesehen ist. Insbesondere bei als Drehtische ausgebildeten Arbeitstischen 5 hat diese Ausführungsform den Vorteil, dass die an die Konsole 44 angeschlossene Saugleitung 14, 15 die Drehung des Drehtisches nicht behindert.

## Patentansprüche

1. Vorrichtung zum Absaugen von auf einer Bearbeitungsmaschine im Bereich eines Werkstückes (3) anfallenden Bearbeitungsrückständen, wie Späne und/oder Stäube, mit einer das auf einem Arbeitstisch (5) aufgespannte Werkstück (3) umgebenden Einfassung (12) zur Eingrenzung des Ablagerungsbereichs der Bearbeitungsrückstände in einem nach oben offenen Saugraum (16) und mit einem an den Saugraum (16) über einen Saugkanal angeschlossenen Saugaggregat zur Erzeugung eines Saugluftstromes innerhalb des Saugraumes, wobei der Arbeitstisch (5) mehrere Spannuten (6) zum Festspannen des Werkstückes (3) aufweist,
**dadurch gekennzeichnet,**
dass der Saugkanal durch mindestens eine im Arbeitstisch (5) vorgesehene und innerhalb des Saugraumes (16) sich befindende Nut gebildet ist.

2. Vorrichtung nach Anspruch 1, dadurch gekennzeichnet, dass die Nut von mindestens einer Spannut (6) gebildet ist, die ausserhalb des Saugraumes (16) abgedeckt ist.

3. Vorrichtung nach Anspruch 1 und 2, dadurch gekennzeichnet, dass die wenigstens eine Nut zwischen den Spannuten (6) im Arbeitstisch (5) vorgesehen ist.

4. Vorrichtung nach einem der Ansprüche 1 bis 3, dadurch gekennzeichnet, dass die Nuten in einen im Arbeitstisch (5) vorgesehenen Ringkanal münden, der mit dem Saugkanal verbunden ist.

5. Vorrichtung nach einem der Ansprüche 1 bis 4, dadurch gekennzeichnet, dass die Spannuten (6) an zwei gegenüberliegenden Kanten des Arbeitstisches (5) in quer zu den Spannuten (6) verlaufenden Rinnen (9, 10) auslaufen, und dass eine Saugleitung (14 oder 15) mit einem düsenartig ausgebildeten Rohrstutzen (30 oder 31) an mindestens eine Rinne (9 oder 10) angeschlossen ist.

6. Vorrichtung nach Anspruch 5, dadurch gekennzeichnet, dass an den Rohrstutzen (30, 31) Abdeckbleche (28, 29) befestigt sind.

## Claims

1. Suction device for removing machining waste, such as chips and/or dusts encountered in a machine tool in the area of a workpiece (3), having a border (12) surrounding a workpiece when mounted on the worktable (5), for defining the settling area for the machining waste to an upwardly open suction space (16), and a suction unit connected to the suction space (16) via a suction duct for producing a suction air current in the suction area, the worktable (5) having a plurality of chucking grooves (6) that serve to fix the workpiece (3) in position,
characterised in that
the suction duct is formed by at least one groove provided in the worktable (5) and positioned within a suction space (16).

2. Device according to claim 1, characterised in that the groove is formed by at least one chucking groove (6) that is covered outside the suction space (16).

3. Device according to claim 1 and 2, chracterised in that the at least one groove is provided between the chucking grooves (6) in the worktable (5).

4. Device according to any of claims 1 to 3, characterised in that the grooves open into an annular duct provided in the worktable (5) that is connected with the suction channel.

5. Device according to any of claims 1 to 4, characterised in that the chucking grooves (6) terminate at two opposite edges of the worktable (5) in channels (9, 10) extending transversely to the chucking grooves (6), and a suction line (14 or 15) comprising a connecting sleeve of nozzle-like configuration (30 or 31) is connected to at least one channel (9 or 10).

6. Device according to claim 5, characterised in that cover sheets (28, 29) are fastened on the connecting sleeves (30, 31).

## Revendications

1. Dispositif pour l'aspiration de résidus d'usinage produits sur une machine d'usinage dans la zone d'une pièce (3), tels que copeaux et/ou poussières, avec une enceinte (12) entourant la pièce (3) serrée sur un banc de travail (5) pour localiser la zone de dépôt des résidus d'usinage dans un compartiment d'aspiration (16) ouvert vers le haut et un groupe d'aspiration sur le compartiment d'aspiration (16), générant un flux d'air d'aspiration à l'intérieur du compartiment d'aspiration, le banc de travail (5) présentant plusieurs rainures (6) pour le serrage de la pièce (3),
**caractérisé en ce que**
le canal d'aspiration est formé par au moins une rainure prévue dans le banc de travail (5) et se trouvant à l'intérieur du compartiment d'aspiration (16).

2. Dispositif selon la revendication 1, caractérisé en ce que la rainure est formée par au moins une rainure de serrage (6) recouverte à l'extérieur du compartiment d'aspiration (16).

3. Dispositif selon la revendication 1 et 2, caractérisé en ce que la au moins une rainure est prévue entre les rainures de serrage (6) dans le banc de travail (5).

4. Dispositif selon l'une des revendications 1 à 3, caractérisé en ce que les rainures aboutissent dans un canal circulaire prévu dans le banc de travail (5) et relié avec le canal d'aspiration.

5. Dispositif selon l'une des revendications 1 à 4, caractérisé en ce que les rainures de serrage (6) se terminent sur deux bords opposés du banc de travail (5) dans des goulottes (9, 10) transversales aux rainures de serrage (6) et qu'une conduite d'aspiration (14 ou 15) avec une tubulure (30 ou 31) en forme de tuyère est raccordée à au moins une goulotte (9 ou 10).

6. Dispositif selon la revendication 5, caractérisé en ce que des tôles de recouvrement (28, 29) sont fixées sur les tubulures (30, 31).
